# EUROPEAN PATENT SPECIFICATION

(11) **EP 4 692 648 B1**
(45) Date of publication and mention of the grant of the patent: **28.10.2026**
(21) Application number: 25191473.5
(22) Date of filing: 24.07.2025
(51) Int. Cl.: F24C 15/16, A47J 37/04

(54) **ASSEMBLY FOR GRILL COOKING IN AN OVEN AND OVEN COMPRISING SUCH ASSEMBLY**
ANORDNUNG ZUM GRILLGAREN IN EINEM OFEN UND OFEN MIT EINER SOLCHEN ANORDNUNG
ENSEMBLE POUR LA CUISSON AU GRIL DANS UN FOUR ET FOUR COMPRENANT UN TEL ENSEMBLE

(30) Priority: 06.08.2024 IT 202400018451
(43) Date of publication of application: 11.02.2026
(73) Proprietor: Beko Italy Manufacturing S.r.l., 20156 Milano (IT)
(72) Inventor: CORBO, Luca, 20156 Milano (IT); DISTASO, Luca, 20156 Milano (IT)
(74) Representative: Buzzi, Notaro & Antonielli d'Oulx S.p.A.

(56) References cited:
- EP-A1- 2 587 167
- WO-A1-2018/223713
- CN-A- 113 892 832
- KR-A- 20030 028 146
- US-A1- 2019 053 661
- US-A1- 2021 298 520

## Description

### Technical field of the invention

The present invention relates to cooking accessories for ovens and particularly to an assembly for grill cooking in the cavity of an oven for domestic use.

### Background

Modern ovens for domestic use are generally equipped with various types of heating members to enable different cooking methods. In addition to electric resistances positioned below the cooking cavity and fans with or without heating members, a radiant-type heating member is typically located in the upper part of the cooking cavity to enable grill cooking. The radiant member is typically positioned at the upper wall of the cooking cavity to maximize usable space for food inside the cavity.

To perform a grill cooking, a user may place the food to be grilled on one of the oven racks, made for example of stainless steel or chrome-plated steel wire, and position a drip tray underneath to collect fat and liquids released by the food during cooking.

Specific accessories for oven grill cooking are also known, such as assemblies comprising combinations of trays and grills, which are specially shaped for insertion into the trays and feature support legs that act as spacers with respect to the bottom of the trays.

Additionally, grill cooking assemblies comprising combinations of oven racks and appropriate perforated containers are known.

Publication US2007137501A1 describes, for example, a grill cooking accessory for ovens comprising an assembly of an oven rack and a perforated basket removably housed in an aperture formed in the rack. The perforated basket is made of stainless-steel wire mesh and comprises a box-shaped body closed by a lid hinged on one side thereof. The lid is also made of steel wire. The box-shaped body is provided with a plurality of hooks that allow removable anchoring of the basket to the rack along the perimeter of the aperture formed in the same rack.

As known, during a grill cooking process in an oven, the food, typically meat, fish, and/or vegetables, is placed substantially flattened on the grill and must be periodically flipped to expose both sides to the radiant member arranged in the upper part of the cooking cavity. This operation requires at least partial extraction of the rack and the drip tray from the oven cavity, or of the grill cooking accessory, and flipping each individual piece of food, resulting in significant heat loss to the surrounding environment and potential burn risks for the user.

Furthermore, extracting the rack and drip tray from the oven cavity, or the grill cooking accessory, often leads to soiling of surfaces near the oven.

The following prior art documents are also relevant to the present invention. They disclose various food racks and baskets comprising features that enable their rotation: EP 2587167 A1 ; US 2021/298520 A1; US 2019/053661 A1; KR 20030028146 A; WO 2018/223713 A1 and CN 113892832 A.

### Summary of the invention

The technical problem addressed and solved by the present invention is therefore to provide a grill cooking assembly for ovens that overcomes the aforementioned drawbacks of the prior art.

This problem is solved by an assembly according to claim 1.

Preferred features of the present invention are the subject of the dependent claims.

The grill cooking assembly according to the invention comprises a frame shaped like an oven rack and one or more baskets with respective lids, which are respectively removably restrained to the frame and housed in an aperture formed therein. The baskets are also respectively rotatably constrained to the frame around a rotation axis, thus enabling a 180° rotation relative to the frame for periodic flipping of the food during a grill cooking process.

Thanks to this configuration, during a grill cooking process, it is possible to completely rotate the baskets within the oven cavity without requiring extraction of the frame and baskets themselves. This reduces heat loss from the oven cavity.

The baskets are advantageously provided with handle-shaped protruding portions, which can be easily operated by a user wearing a glove or mitt from outside the oven cavity, minimizing burn risks.

According to one aspect of the invention, the frame of the grill cooking assembly has a cam profile beneath each handle-shaped protruding portion. The cam profile has a curved shape that extends toward the bottom of the oven cavity during use of the assembly according to the invention. This enables to support and guide the handle during rotation of the basket, minimizing the user effort.

According to another aspect, each basket is advantageously equipped with a stop member arranged at the free end of its rotation axis. During rotation, the stop member prevents the basket from disengaging from the frame and falling into the aperture thereof, ensuring safe operation.

Other advantages, features, and modes of use of the present invention will be apparent from the following detailed description of exemplary, non-limiting embodiments.

### Brief description of the drawings

Reference will be made to the accompanying drawings, in which:
- figure 1 is a perspective view showing aa oven grill cooking assembly according to the present invention;
- figures 2a and 2b are exploded front and rear perspective views, respectively, of the grill cooking assembly of figure 1;
- figures 3a and 3b are exploded front and rear perspective views, respectively, of a basket of the grill cooking assembly of figure 1;
- figures 4a and 4b are front and rear perspective views, respectively, of a frame of the grill cooking assembly of figure 1;
- figures 5a, 5b, 6a, 6b, 7a, 7b, 8a, and 8b are, respectively, pairs of front and cross-sectional views schematically showing consecutive phases of basket rotation in the grill cooking assembly of figure 1 inside an oven.

### Detailed description of preferred embodiments

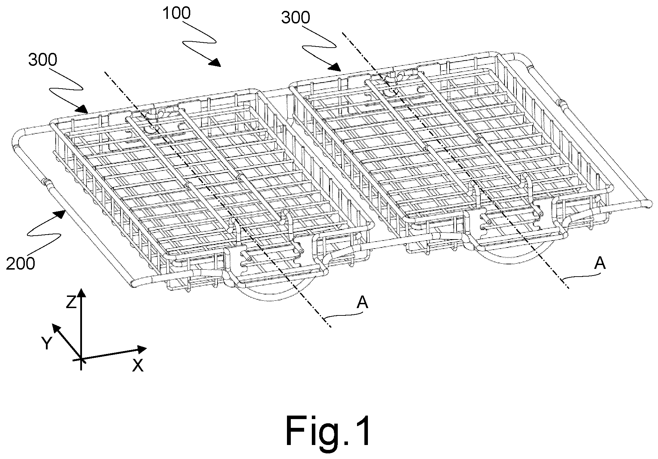

With initial reference to figures 1 to 4b, the assembly 100 according to the invention for grill cooking in an oven comprises a frame 200 housing one or more perforated baskets 300, two in the embodiment shown in the figures. The baskets 300 are removably restrained to the frame 200.

In the figures, the assembly 100 is shown with reference to a three-axis system X, Y, and Z, where axes X and Y define a horizontal plane, while axis Z represents a vertical direction along which gravity acts.

As shown in the aforementioned figures, the frame 200 is shaped like an oven rack to allow insertion thereof into the cooking cavity of a traditional oven, supported by guides integrally formed in the side walls of the same cavity or by more recent metal-wire racks applied to the side walls of the cavity.

The frame 200 is made, for example, of metal wire, stainless steel or chrome-plated steel, like conventional oven racks, and has a central aperture 210 which enables to house the baskets 300. In the illustrated embodiment, the two baskets 300 are positioned side by side.

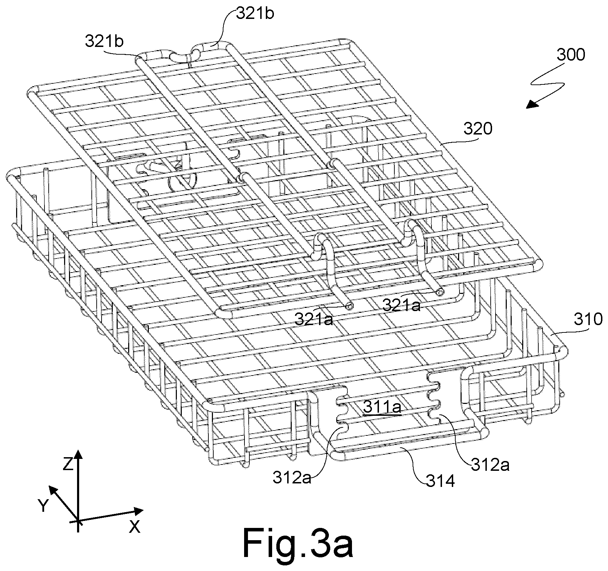

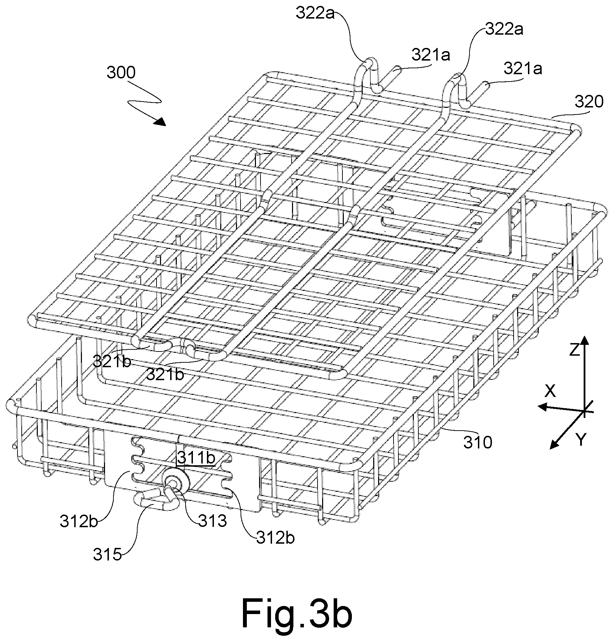

With particular reference to figures 3a and 3b, each basket 300 comprises a box-shaped body 310 and a lid 320. The body 310 and lid 320 are made, for example, of metal wire mesh, for example stainless steel or chrome-plated steel.

The lid 320 is removably secured to the body 310 of the basket 300.

In the illustrated embodiment, in two of the opposite walls of the body 310 there are for example obtained apertures 311a, 311b which have a plurality of indentations 312a, 312b on their respective opposite vertical edges. Correspondingly, on the opposite sides of the lid 320 there are protruding portions or protrusions 321a, 321b configured to engage pairs of indentations 312a, 312b.

To allow the opening and closing of the lid 320 on the body 310, the protrusions on one of its sides, for example the protrusions 321a, are movable on a horizontal plane parallel to the XY plane, while those on the opposite side, for example the protrusions 321b, are fixed.

The fixed protrusions 321b formed on the lid 320 enable its bayonet insertion into the indentations 312b on one side of the body 310, while the movable protrusions 321a act as locking members that selectively engage the indentations 312a on the opposite side of the body 310.

To close the lid 320 of the basket 300, the fixed protrusions 321b are thus inserted in a bayonet fashion into the indentations 312b on the body 310, the lid 320 is rotated toward the body 310, and the movable protrusions 321a engage the indentations 312a.

As shown in the illustrated embodiment, the fixed protrusions 321b and the movable protrusions 321a may advantageously be formed from a single U-shaped metal wire, which is constrained to the lid 320 near the fixed portions 321b.

The free ends of the U-shaped profile constitute the movable protrusions 321a, which can be operated by bringing them closer together for insertion into the indentations 312a or their disengagement therefrom.

This particular embodiment provides a certain degree of elasticity to the movable protrusions 321a, allowing them to snap-engage the indentations 312a.

In the illustrated embodiment, in the U-shaped profile there are advantageously obtained dedicated extensions (or appendages) 322a that extend vertically from the lid 320 as handles near the movable protrusions 321a, to facilitate the snap-opening and closing operation of the lid 320.

The fixed protrusions 321b are formed on the curved end of the U-shaped profile.

The provision of multiple indentations 312a, 312b on opposite vertical edges of the apertures 311a, 311b allows the lid 320 to be secured at different heights relative to the body 310 of the basket 300. In this way, it is possible to close the lid 320 at the optimal height, with respect to the vertical bulk of the food to be grilled, preventing displacement of the same food during the operation of rotation of the basket 300 during a grill cooking process.

As mentioned above, the baskets 300 are respectively removably constrained to the frame 200.

More specifically, on two opposite sides of the body 310 of each basket 300, protruding portions 313, 314 are formed, that extend outward from the body 310, enabling resting thereof on the opposite edges or sides of the frame 200, where appropriate shaped portions 220, 230 are provided. The basket 300 can be inserted into and removed from the frame 200 in the vertical direction Z.

According to the present invention, the protruding portions 313, 314 and the shaped portions 220, 230 are configured not only to define a support constraint but also to enable rotation of the basket 300 relative to the frame 200 about an axis A.

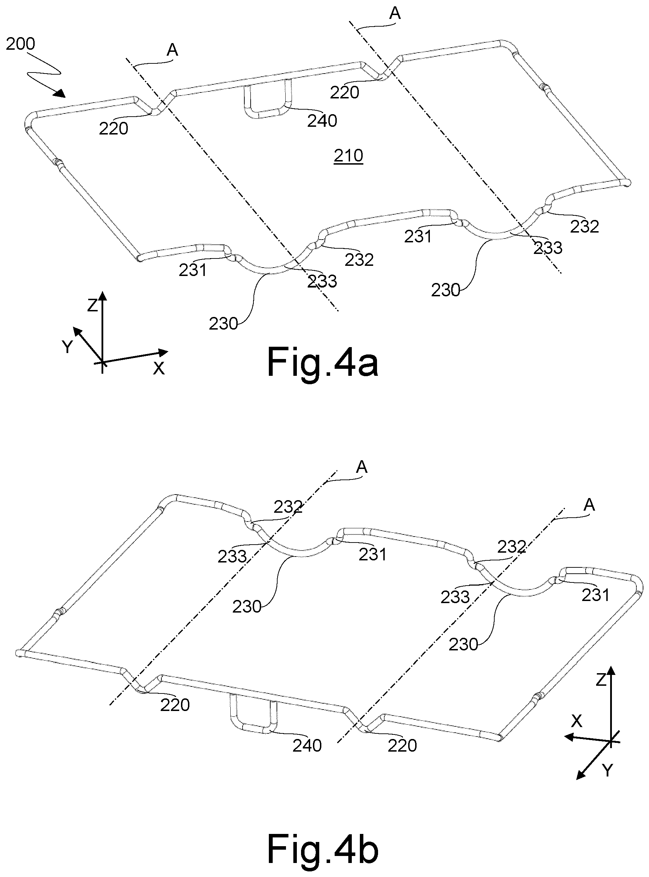

With further reference to figures 3a, 3b, 4a, and 4b, one of the protruding portions, for example the protruding portion 313, is shaped as a post (or pin) defining an axis A of rotation; the corresponding shaped portion 220 is a notch (or recess), V-shaped as in the illustrated embodiment, or alternatively U-shaped, thus forming with the post 313 a hinge constraint for the rotation of the basket 300 about axis A. The opposite protruding portion, for example the protruding portion 314, is instead shaped as a handle, and the corresponding shaped portion 230 has a cam profile, with two straight portions (or segments) 231, 232 substantially parallel to the edge or side of the frame 200, and a curved portion (or segment) 233 comprised between the straight portions, that extends vertically downward. The straight portions 231, 232 provide stable support for the handle-shaped protrusion 314 during cooking process and also during the operation of insertion and extraction of the frame-basket assembly, while the curved portions 233 acts as a guide and support for the handle 314 during rotation of the basket 300 when it is necessary to flip the food during a grill cooking process.

In other words, according to the present invention, at least one of the protruding portions defines a rotation axis, and the shaped portions are configured to define with said protruding portion a hinge constraint suitable for enabling rotation of the basket 300 relative to the frame 200 about the rotation axis.

The figures from 5a to 8b schematically and exemplarily show successive phases of rotation of one of the baskets 300 of the assembly 100, relative to the frame 200 in the cooking cavity C of a generic oven O. The oven comprises a radiant member B which allows for grill cooking operations. The radiant member B is positioned in the upper part of the cooking cavity C.

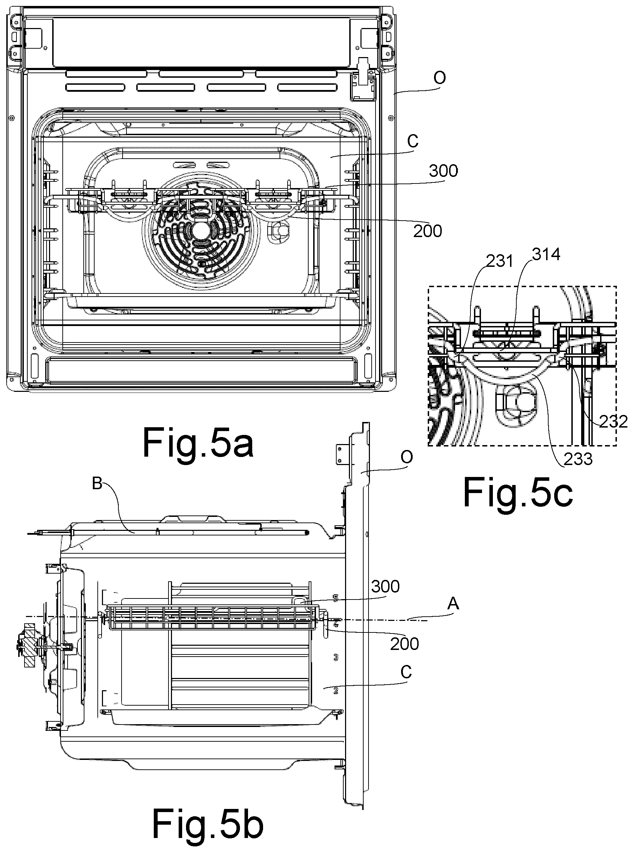

Figures 5a, 5b, and 5c show a starting position where the basket 300 rests on the frame 200. As highlighted in the detail of figure 5c, the handle portion 314 rests stably on the portions 231, 232 of the shaped portion 230.

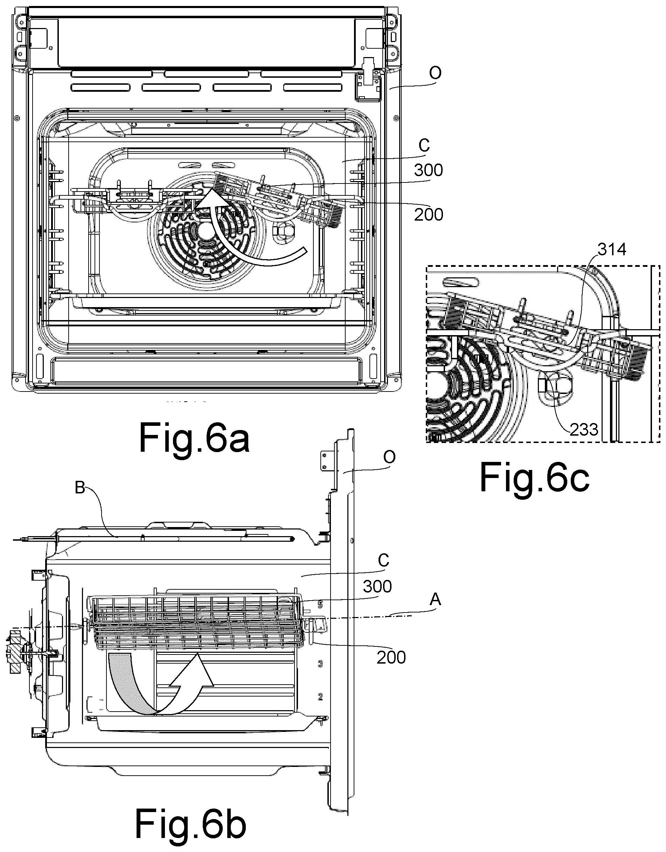

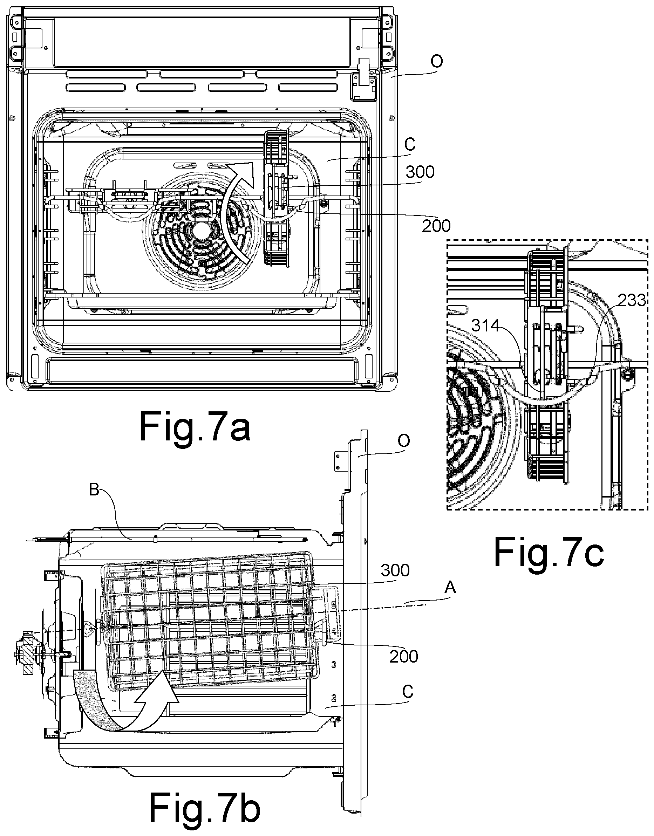

As shown in Figures 6a, 6b, 6c and 7a, 7b, 7c, by operating the handle 314, for example with a mitt or an oven glove, a user slightly lifts the end of the basket 300 and, by exploiting the hinge constraint defined by the post 313 and the notch 220, rotates the basket 300 about axis A. The rotation of the basket 300 can occur indifferently in either clockwise or counterclockwise direction.

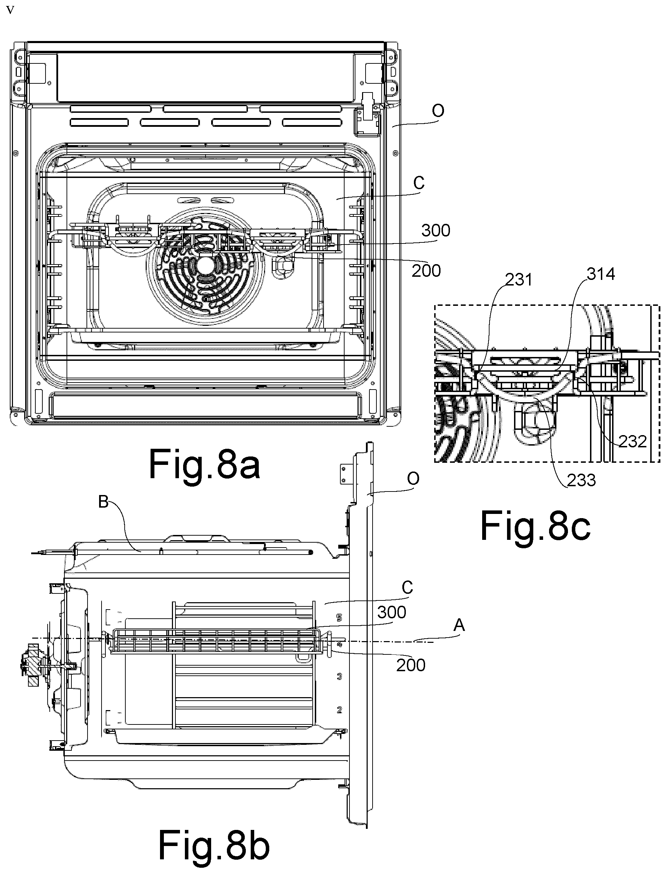

With continued reference to Figures 6a, 6b, 6c and 7a, 7b, 7c, during rotation of the basket 300, the handle portion 314 slides, is supported and guided along the curved portion 233 of the cam profile 230, which circumstance allows for transferring the weight of the basket 300 and the food contained therein to the frame 200, thus assisting the user. Figures 8a, 8b, and 8c show the basket 300 flipped by 180° with the handle portion 314 again stably resting on the portions 231, 232 of the shaped portion 230.

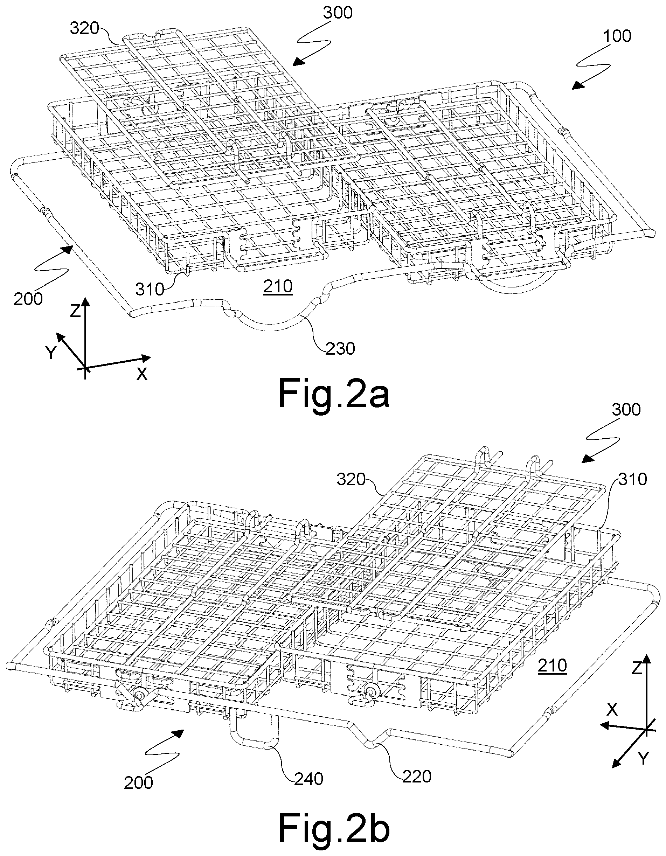

With further reference to figures 2b and 3b, a stop member 315 may advantageously be positioned at the free end of the post 313, to restrict or limit the movement of the basket 300 in the direction of the axis A during rotation thereof. This allows to prevent the post 313 of the basket 300 from disengaging from the notch 220, causing the basket 300 to fall into the aperture 210 of the frame 200. The stop member 315 may be integrally formed with the post 313, for example by bending the free end thereof in a direction substantially transverse to the rotation axis A. In other words, the free end of the post 313 extends transversely to the rotation axis A.

In the illustrated embodiment, the stop member 315 has, for example, a triangular or dovetail shape, obtained by forming consecutive bends at the free end of the post 313. In addition to defining a constraint in the direction of the axis A, this particular embodiment of the stop member 315 offers the benefit of facilitating the phase of insertion of the post 313 of the basket 300 into the notch 220.

According to a further aspect of the invention, the frame 200 may also advantageously comprise a plurality of extensions that allow the grill cooking assembly 100 to be placed on a countertop when the frame is fully extracted with baskets 300 from an oven cavity, after a grill cooking process.

With particular reference to Figures 4a and 4b, the illustrated embodiment shows, for example, an extension 240 formed on the same side of the frame 200 where the notch 220 defining the hinge constraint with the post 313 is located. The extension 240 may for example consist of the same metal wire which forms the frame 200 and may have a substantially rectangular shape, suitable for providing stable support for the frame 200.

Further extensions may similarly be provided, located along the sides of the frame 200.

The curved portions 233 of the cam profiles of the shaped portions 230 supporting the handle protrusions 314 of the baskets 300 advantageously constitute further extensions for supporting the frame 200 on a countertop.

The present invention has been described thus far with reference to its preferred embodiments. It should be understood that other embodiments pertaining to the same inventive core, as defined by the claims below, may exist.

## Claims

1. An assembly (100) for grill cooking in a domestic oven, said assembly (100) comprising:
i) a frame (200) shaped as an oven rack;
ii) one or more baskets (300) that are removably restrained to said frame (200);
the frame (200) having an aperture (210) that allows to receive said one or more baskets (300),
wherein each basket (300) comprises a box-shaped body (310) and a lid (320) that is removably mounted to said body (310),
wherein protruding portions (313, 314) extending outwards from the body (310) of each basket (300) are formed on two opposite sides thereof, and wherein shaped portions (220, 230) are formed on opposite sides of the frame (200), said shaped portions (220, 230) being configured to mate said protruding portions (313, 314),
wherein at least one of the protruding portions (313, 314) defines a rotation axis (A),
wherein at least one of the shaped portions (220, 230) is configured to define with said at least one protruding portion a hinge suitable to allow the basket (300) to be rotated relative to the frame (200) about said rotation axis (A),
wherein one of the protruding portions (313) is a post that defines the rotation axis (A) and wherein the corresponding shaped portion formed on the side of the frame (200) is a notch (220) that defines with the post (313) said hinge,
wherein the protruding portion (314) opposite the post (313) is a handle,
and wherein the corresponding shaped portion (230) formed on the side of the frame (200) features a cam profile comprising two straight portions (231, 232) which are substantially parallel to the side of the frame (200), and a curved portion (233) that is arranged between the two straight portions (231, 232) and protrudes vertically downwards.

2. The assembly (100) according to claim 1, wherein at the free end of the post (313) a stop member (315) is arranged, said stop member (315) restricting the movement of the basket (300) in the direction of the rotation axis (A).

3. The assembly (100) according to claim 2, wherein the stop member (315) is integrally formed with the post (313) and is defined by the free end of the post (313), which extends in a direction that is substantially transverse to the rotation axis (A).

4. The assembly (100) according to any one of the previous claims, wherein apertures (311a, 311b) are formed in two opposite walls of the body (310) of the basket (300), said apertures (311a, 311b) featuring indentations (312a, 312b) on their respective opposite vertical edges, and wherein on corresponding opposite sides of the lid (320) of the basket (300) protruding portions (321a, 321b) are formed, said protruding portions (321a, 321b) being configured to engage pairs of said indentations (312a, 312b).

5. The assembly (100) according to claim 4, wherein the protruding portions (321a) formed on one side of the lid (320) are movable relative thereto, while the protruding portions (321b) formed on the opposite side of the lid (320) are fixed relative thereto, said fixed protruding portions (321b) serving as bayonet members for fitting the lid (320) into the indentations (312b) formed on one side of the body (310), and said movable protruding portions (321a) serving as locking members suitable to selectively engage the indentations (312a) formed on the opposite side of the body (310).

6. The assembly (100) according to claim 5, wherein the movable protruding portions (321a) and the fixed protruding portions (321b) are formed from a single U-shaped metal wire fixed on the lid (320), the free ends of said U-shaped metal wire forming the movable protruding portions (321a) and the curved portion of the U-shaped wire forming the fixed protruding portions (321b).

7. The assembly (100) according to claim 6, wherein a pair of extensions (322a) are formed on the U-shaped metal wire, said extensions (322a) extending vertically upwards from the lid (320) proximate to the movable protruding portions (321a), thereby defining a pair of handles for operating the movable protruding portions (321a).

8. The assembly (100) according to any one of the previous claims, wherein the body (310) and the lid (320) of the basket (300) are made of a metal wire mesh.

9. The assembly (100) according to any one of the previous claims, wherein the frame (200) is made of metal wire.

10. The assembly (100) according to any one of the previous claims, wherein the frame (200) comprises a plurality of extensions (233, 240) that allow to place the grill cooking assembly (100) on a countertop.

11. A domestic oven (O) comprising a cooking cavity (C) and a radiant heating member (B) arranged in an upper portion of said cooking cavity (C), said radiant heating member (B) being suitable to carry out grilling, said oven (O) comprising a grill cooking assembly (100) according to any one of the previous claims.

## Patentansprüche

1. Baugruppe (100) zum Grillgaren in einem Haushaltsbackofen, wobei besagte Baugruppe (100) umfasst:
i) einen Rahmen (200), der als Ofenrost geformt ist;
ii) einen oder mehrere Körbe (300), die abnehmbar an besagtem Rahmen (200) gehalten werden;
wobei der Rahmen (200) eine Öffnung (210) aufweist, die es ermöglicht, besagten einen oder mehrere Körbe (300) aufzunehmen,
wobei jeder Korb (300) einen kastenförmigen Körper (310) und einen Deckel (320) umfasst, der abnehmbar an besagtem Körper (310) montiert ist,
wobei vorstehende Abschnitte (313, 314), die sich vom Körper (310) jedes Korbes (300) nach außen erstrecken, an zwei gegenüberliegenden Seiten desselben ausgebildet sind, und wobei geformte Abschnitte (220, 230) an gegenüberliegenden Seiten des Rahmens (200) ausgebildet sind, wobei besagte geformte Abschnitte (220, 230) konfiguriert sind, um mit besagten vorstehenden Abschnitten (313, 314) zusammenzuwirken,
wobei mindestens einer der vorstehenden Abschnitte (313, 314) eine Drehachse (A) definiert,
wobei mindestens einer der geformten Abschnitte (220, 230) konfiguriert ist, um mit dem besagten mindestens einen vorstehenden Abschnitt ein Scharnier zu definieren, das geeignet ist, es dem Korb (300) zu ermöglichen, relativ zum Rahmen (200) um besagte Drehachse (A) gedreht zu werden,
wobei einer der vorstehenden Abschnitte (313) ein Zapfen ist, der die Drehachse (A) definiert, und wobei der entsprechende geformte Abschnitt, der an der Seite des Rahmens (200) ausgebildet ist, eine Kerbe (220) ist, die mit dem Zapfen (313) besagtes Scharnier definiert,
wobei der dem Zapfen (313) gegenüberliegende vorstehende Abschnitt (314) ein Griff ist,
und wobei der entsprechende geformte Abschnitt (230), der an der Seite des Rahmens (200) ausgebildet ist, ein Nockenprofil aufweist, das zwei gerade Abschnitte (231, 232), die im Wesentlichen parallel zur Seite des Rahmens (200) sind, und einen gekrümmten Abschnitt (233) umfasst, der zwischen den zwei geraden Abschnitten (231, 232) angeordnet ist und vertikal nach unten vorsteht.

2. Baugruppe (100) nach Anspruch 1, wobei am freien Ende des Zapfens (313) ein Anschlagelement (315) angeordnet ist, wobei besagtes Anschlagelement (315) die Bewegung des Korbes (300) in Richtung der Drehachse (A) einschränkt.

3. Baugruppe (100) nach Anspruch 2, wobei das Anschlagelement (315) einstückig ausgebildet ist mit dem Zapfen (313) und durch das freie Ende des Zapfens (313) definiert ist, das sich in einer Richtung erstreckt, die im Wesentlichen quer zur Drehachse (A) ist.

4. Baugruppe (100) nach einem der vorhergehenden Ansprüche, wobei Öffnungen (311a, 311b) in zwei gegenüberliegenden Wänden des Körpers (310) des Korbes (300) ausgebildet sind, wobei besagte Öffnungen (311a, 311b) Einkerbungen (312a, 312b) an ihren jeweiligen gegenüberliegenden vertikalen Rändern aufweisen, und wobei an entsprechenden gegenüberliegenden Seiten des Deckels (320) des Korbes (300) vorstehende Abschnitte (321a, 321b) ausgebildet sind, wobei besagte vorstehende Abschnitte (321a, 321b) konfiguriert sind, um mit Paaren von besagten Einkerbungen (312a, 312b) in Eingriff zu treten.

5. Baugruppe (100) nach Anspruch 4, wobei die an einer Seite des Deckels (320) ausgebildeten vorstehenden Abschnitte (321a) relativ dazu beweglich sind, während die an der gegenüberliegenden Seite des Deckels (320) ausgebildeten vorstehenden Abschnitte (321b) relativ dazu fixiert sind, wobei besagte fixierte vorstehende Abschnitte (321b) als Bajonettelemente zum Einpassen des Deckels (320) in die an einer Seite des Körpers (310) ausgebildeten Einkerbungen (312b) dienen, und besagte bewegliche vorstehende Abschnitte (321a) als Verriegelungselemente dienen, die geeignet sind, selektiv mit den an der gegenüberliegenden Seite des Körpers (310) ausgebildeten Einkerbungen (312a) in Eingriff zu treten.

6. Baugruppe (100) nach Anspruch 5, wobei die beweglichen vorstehenden Abschnitte (321a) und die fixierten vorstehenden Abschnitte (321b) aus einem einzelnen U-förmigen Metalldraht gebildet sind, der am Deckel (320) befestigt ist, wobei die freien Enden des besagten U-förmigen Metalldrahts die beweglichen vorstehenden Abschnitte (321a) bilden und der gekrümmte Abschnitt des U-förmigen Drahts die fixierten vorstehenden Abschnitte (321b) bildet.

7. Baugruppe (100) nach Anspruch 6, wobei ein Paar von Fortsätzen (322a) am U-förmigen Metalldraht ausgebildet ist, wobei sich besagte Fortsätze (322a) vertikal nach oben vom Deckel (320) nahe den beweglichen vorstehenden Abschnitten (321a) erstrecken, wodurch ein Paar von Griffen zum Betätigen der beweglichen vorstehenden Abschnitte (321a) definiert wird.

8. Baugruppe (100) nach einem der vorhergehenden Ansprüche, wobei der Körper (310) und der Deckel (320) des Korbes (300) aus einem Metalldrahtgeflecht hergestellt sind.

9. Baugruppe (100) nach einem der vorhergehenden Ansprüche, wobei der Rahmen (200) aus Metalldraht hergestellt ist.

10. Baugruppe (100) nach einem der vorhergehenden Ansprüche, wobei der Rahmen (200) eine Vielzahl von Fortsätzen (233, 240) umfasst, die es ermöglichen, die Grillgarbaugruppe (100) auf einer Arbeitsplatte abzustellen.

11. Haushaltsbackofen (O), umfassend einen Garraum (C) und ein Strahlungsheizelement (B), das in einem oberen Abschnitt des besagten Garraums (C) angeordnet ist, wobei besagtes Strahlungsheizelement (B) geeignet ist, ein Grillen durchzuführen, wobei besagter Ofen (O) eine Grillgarbaugruppe (100) nach einem der vorhergehenden Ansprüche umfasst.

## Revendications

1. Un ensemble (100) pour la cuisson au gril dans un four domestique, ledit ensemble (100) comprenant :
i) un cadre (200) façonné comme une grille de four ;
ii) un ou plusieurs paniers (300) qui sont retenus de manière amovible sur ledit cadre (200) ;
le cadre (200) ayant une ouverture (210) qui permet de recevoir lesdits un ou plusieurs paniers (300),
dans lequel chaque panier (300) comprend un corps en forme de boîte (310) et un couvercle (320) qui est monté de manière amovible sur ledit corps (310),
dans lequel des parties saillantes (313, 314) s'étendant vers l'extérieur depuis le corps (310) de chaque panier (300) sont formées sur deux côtés opposés de celui-ci, et dans lequel des parties façonnées (220, 230) sont formées sur des côtés opposés du cadre (200), lesdites parties façonnées (220, 230) étant configurées pour s'accoupler auxdites parties saillantes (313, 314),
dans lequel au moins l'une des parties saillantes (313, 314) définit un axe de rotation (A),
dans lequel au moins l'une des parties façonnées (220, 230) est configurée pour définir avec ladite au moins une partie saillante une charnière apte à permettre au panier (300) d'être tourné par rapport au cadre (200) autour dudit axe de rotation (A),
dans lequel l'une des parties saillantes (313) est un montant qui définit l'axe de rotation (A) et dans lequel la partie façonnée correspondante formée sur le côté du cadre (200) est une encoche (220) qui définit avec le montant (313) ladite charnière,
dans lequel la partie saillante (314) opposée au montant (313) est une poignée,
et dans lequel la partie façonnée correspondante (230) formée sur le côté du cadre (200) présente un profil de came comprenant deux parties droites (231, 232) qui sont sensiblement parallèles au côté du cadre (200), et une partie courbe (233) qui est disposée entre les deux parties droites (231, 232) et fait saillie verticalement vers le bas.

2. L'ensemble (100) selon la revendication 1, dans lequel à l'extrémité libre du montant (313) un élément de butée (315) est disposé, ledit élément de butée (315) limitant le mouvement du panier (300) dans la direction de l'axe de rotation (A).

3. L'ensemble (100) selon la revendication 2, dans lequel l'élément de butée (315) est formé d'un seul tenant avec le montant (313) et est défini par l'extrémité libre du montant (313), qui s'étend dans une direction qui est sensiblement transversale à l'axe de rotation (A).

4. L'ensemble (100) selon l'une quelconque des revendications précédentes, dans lequel des ouvertures (311a, 311b) sont formées dans deux parois opposées du corps (310) du panier (300), lesdites ouvertures (311a, 311b) présentant des indentations (312a, 312b) sur leurs bords verticaux opposés respectifs, et dans lequel sur des côtés opposés correspondants du couvercle (320) du panier (300) des parties saillantes (321a, 321b) sont formées, lesdites parties saillantes (321a, 321b) étant configurées pour engager des paires desdites indentations (312a, 312b).

5. L'ensemble (100) selon la revendication 4, dans lequel les parties saillantes (321a) formées sur un côté du couvercle (320) sont mobiles par rapport à celui-ci, tandis que les parties saillantes (321b) formées sur le côté opposé du couvercle (320) sont fixes par rapport à celui-ci, lesdites parties saillantes fixes (321b) servant d'éléments à baïonnette pour insérer le couvercle (320) dans les indentations (312b) formées sur un côté du corps (310), et lesdites parties saillantes mobiles (321a) servant d'éléments de verrouillage aptes à engager sélectivement les indentations (312a) formées sur le côté opposé du corps (310).

6. L'ensemble (100) selon la revendication 5, dans lequel les parties saillantes mobiles (321a) et les parties saillantes fixes (321b) sont formées à partir d'un seul fil métallique en forme de U fixé sur le couvercle (320), les extrémités libres dudit fil métallique en forme de U formant les parties saillantes mobiles (321a) et la partie courbe du fil en forme de U formant les parties saillantes fixes (321b).

7. L'ensemble (100) selon la revendication 6, dans lequel une paire de prolongements (322a) sont formés sur le fil métallique en forme de U, lesdits prolongements (322a) s'étendant verticalement vers le haut depuis le couvercle (320) à proximité des parties saillantes mobiles (321a), définissant ainsi une paire de poignées pour actionner les parties saillantes mobiles (321a).

8. L'ensemble (100) selon l'une quelconque des revendications précédentes, dans lequel le corps (310) et le couvercle (320) du panier (300) sont réalisés en un treillis métallique.

9. L'ensemble (100) selon l'une quelconque des revendications précédentes, dans lequel le cadre (200) est réalisé en fil métallique.

10. L'ensemble (100) selon l'une quelconque des revendications précédentes, dans lequel le cadre (200) comprend une pluralité de prolongements (233, 240) qui permettent de placer l'ensemble de cuisson au gril (100) sur un plan de travail.

11. Un four domestique (O) comprenant une cavité de cuisson (C) et un élément de chauffage radiant (B) disposé dans une partie supérieure de ladite cavité de cuisson (C), ledit élément de chauffage radiant (B) étant apte à réaliser une cuisson au gril, ledit four (O) comprenant un ensemble de cuisson au gril (100) selon l'une quelconque des revendications précédentes.
